(19) Europäisches Patentamt
European Patent Office
Office européen des brevets

(11) **EP 2 006 945 A1**

(12) **EUROPEAN PATENT APPLICATION**

(43) Date of publication:
**24.12.2008 Bulletin 2008/52**

(51) Int Cl.:
*H01M 8/04* *(2006.01)*       *H01M 8/06* *(2006.01)*
*H01M 8/24* *(2006.01)*       *H01M 8/12* *(2006.01)*

(21) Application number: **07012131.4**

(22) Date of filing: **21.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **ETH Zürich**
**8092 Zürich (CH)**

(72) Inventors:
• **Stutz, Michael**
  **8005 Zurich (CH)**
• **Poulikakos, Dimos**
  **8702 Zollikon (CH)**
• **Stark, Wendelin Jan**
  **8400 Winterthur (CH)**

(54) **Method for starting up a fuel cell assembly**

(57)    A method for starting up a fuel cell assembly (100) comprising at least one hydrocarbon fuel source (101), at least one reformer (103) for conversion of a fuel/air mixture into hydrogen at least in steady-state conditions, at least one fuel cell (105) arranged downstream of the reformer (103) for oxidation of hydrogen with concomitant generation of electrical energy is described. The proposed method is characterised in that the fuel cell assembly is started up by first heating up essentially only the reformer (103) by means of an external energy source (107, 122) up to reaching at least locally the reaction temperature ($T_R$) of the fuel/air mixture in said reformer (103) initiating catalytic conversion of said mixture into heated products in an exothermic reaction, and directing the heated products through the fuel cell (105) for heating up the fuel cell (105) from the inside until said fuel cell (105) reaches light-off temperature, and switching the mode of operation to steady state operation as soon as the fuel cell assembly (100) has reached normal operation temperature. The disclosure furthermore relates to the use of a reformer for starting up the fuel cell assembly as well as to the fuel cell assembly suitable for such a method.

**Fig. 6**

**Description**

TECHNICAL FIELD

The present document pertains to the technical field of fuel cells. Specifically, a method for starting up a fuel cell assembly comprising at least one hydrocarbon fuel source, at least one reformer for conversion of a fuel/air mixture into hydrogen at least in steady-state conditions, and at least one fuel cell arranged downstream of the reformer for oxidation of hydrogen with concomitant generation of electrical energy is described.

BACKGROUND OF THE INVENTION

A catalytic hydrocarbon fuel reformer converts a hydrocarbon fuel stream comprising, for example, natural gas, light distillates, butane, gasoline, diesel fuel, and air, into a hydrogen-rich reformate fuel stream comprising a gaseous blend of hydrogen and carbon monoxide. In the reforming process, the hydrocarbon fuel stream is typically fed through a catalyst bed or beds contained within reactor tubes or channels mounted in the reformer vessel. The catalytic conversion process is typically carried out at elevated catalyst temperatures in the range of about several hundred degrees centigrade, e.g. at 600°C.

The produced hydrogen-rich reformate stream may be used, for example, as the fuel gas stream feeding the anode of an electrochemical fuel cell after e.g. passing the reformate stream through a water gas shift reactor and/or other purification means such as a carbon monoxide selective oxidizer. Reformate is particularly well suited to operate a solid oxide fuel cell (SOFC) system because the purification step for removal of carbon monoxide is not required for an SOFC.

Fuel cells are usually classified by the type of electrolyte used. The electrolyte is a specially treated dense material that conducts only ions, and does not conduct electrons. An SOFC uses a hard ceramic electrolyte and typically operates at temperatures up to about 1000°C. A mixture of zirconium oxide and yttrium oxide is typically used to form a crystal lattice that becomes the solid electrolyte. Other oxide combinations have also been used as electrolytes. The solid electrolyte is coated on both sides with specialized porous electrode materials. The specialized porous materials act as a catalyst to facilitate an energy-producing reaction between oxygen and a fuel, such as hydrogen as provided in the form of the above-mentioned reformate or other simple hydrocarbons. The anode is the negative pole of the fuel cell. At a high operating temperature, oxygen ions migrate through the crystal lattice of the electrolyte. When a fuel gas containing hydrogen (commonly propane, methane, or butane) is passed over the anode, a flow of negatively charged oxygen ions moves across the electrolyte to oxidize the fuel. As the fuel is oxidized, electrons are freed that are conducted by the anode as a current that can be used in an external circuit. The oxygen is supplied, usually from air, at the cathode. The cathode is the positive post of the fuel cell and similarly, is designed to evenly distribute oxygen (usually air) to the surface of a catalyst. The cathode also conducts the electrons back from the external circuit to the catalyst. Electrons generated at the anode travel through an external load to the cathode, completing the circuit and supplying electric power along the way. Power generation efficiencies of SOFC's can go up to about 60 percent. The SOFC hardware can consist of an array of tubes or a planar stack of cells.

Since both the reformer as well as the actual fuel cell element need to be at a minimum temperature to actually start the corresponding (electro) chemical conversion process, start-up procedures are necessary for bringing a fuel cell assembly into steady-state normal operation. The typical conventional way of doing that is by heating all the elements of the fuel cell assembly which are hot under normal operation condition by means of an external heat source.

A different approach is proposed in US 2004/0081871, here the fuel cell comprises the actual fuel cell element and a catalytic combustor, a so-called post-combustor, downstream of the fuel cell. In order to bring the fuel cell up to the light-off temperature to initiate the conversion process in the fuel cell, initially only the catalytic combustor is activated and heated, and the heat generated therein is used for heating the fuel cell element by means of specific heat exchange elements.

SUMMARY OF THE INVENTION

It is therefore an object of the present invention to provide an improved method for starting up a fuel cell assembly. Specifically, a method shall be presented for starting up a fuel cell assembly, wherein the fuel cell assembly comprises or is connected to at least one hydrocarbon fuel source, at least one reformer for conversion of a fuel/air mixture into hydrogen at least in steady-state conditions, at least one fuel cell arranged downstream of the reformer for oxidation of hydrogen with concomitant generation of electrical energy. Optionally the fuel cell assembly may also comprise elements like a fuel container, heat exchange units, post-combustor elements, battery/capacitor, control units, etc.

The present invention proposes to start up the fuel cell assembly by first heating up essentially only the reformer (unlike according to the state-of-the-art, where all the hot elements of the fuel cell assembly are heated up concomitantly) by means of an external energy source up to reaching at least locally the reaction temperature of the fuel/air mixture in said reformer. This heating will initiate catalytic conversion of said fuel/air mixture into heated products in an exothermic reaction in the reformer. The heated products are then directed through the fuel cell for heating up the fuel cell from the inside using the normal gas/reactant pathway in the fuel cell assembly. This is carried on until said fuel cell reaches light-off temperature, and subsequently the mode of operation is switched to steady state operation essentially as soon as the fuel cell assembly, as well as if need be optional additional elements of the fuel cell assembly, has reached normal operation temperature.

In contrast to start up methods according to the state-of-the-art, e.g, heating the whole hot part or using a post-combustor for heating up the fuel cell assembly, the proposed method for starting up the fuel cell assembly does not necessitate the presence of additional elements for heat transfer/exchange/convection, and furthermore the proposed start-up mechanism heats the elements of the fuel cell assembly mainly from the inside, so with the maximum efficiency possible in such a set up, by the hot product gases of the reformer.

A particularly efficient starting up method essentially free of any unnecessary losses is possible if, according to an embodiment of the present invention, until the fuel cell reaches light-off temperature, the fuel to air ratio at the inlet of the reformer is kept essentially at or near to an optimum stoichiometric ratio for total oxidation of the fuel. This means that the fuel to air ratio fed into the reformer is adjusted for a conversion process in the reformer which leads to the generation of carbon dioxide and water and is essentially free of generation of carbon monoxide and hydrogen (essentially no partial oxidation).

Typically until the fuel cell reaches light-off temperature, the fuel to air ratio at the inlet of the reformer is kept preferably not more than 20 % off the optimum stoichiometric ratio for total oxidation of the fuel (stoichiometric factor +/- 20%), preferably not more than 10% off the optimum stoichiometric ratio for total oxidation of the fuel. If butane is used as a fuel, this means that the butane/oxygen ratio is preferably kept within a range of 1:4-1:8, even more preferably in the range of 1:6-1:7. It should however be noted, that the air flow can also be adjusted to be somewhat higher in order to regulate the temperature of the outlet gas of the reformer (e.g. to avoid hot spots in the reformer or other components). Indeed according to a further preferred embodiment, until the fuel cell reaches light-off temperature the fuel to air ratio at the inlet of the reformer is kept such that excess air and/or oxygen is present favouring the total oxidation of the fuel (e.g. up to or even exceeding 100% excess air compared to optimum stoichiometric ratio for total oxidation of the fuel), and/or wherein at and subsequent to the fuel cell reaching light-off temperature the fuel to air ratio at the inlet of the reformer is increased continuously or immediately by reduction of air/oxygen supply to favour partial oxidation of the fuel. This also allows to control the temperature of the combustion gases by excess air and to avoid overheating of components.

Correspondingly, in this start-up phase the reformer is essentially operated under a condition in which all the energy available in the hydrocarbon fuel is converted into heat and the reformer does not generate any hydrogen which can be used by the fuel cell element. So the reformer is operated under unusual conditions for the start up process. However, as the fuel cell is not at a sufficiently high temperature at this stage yet anyway for conversion of hydrogen, this does not matter. Correspondingly therefore the products (carbon dioxide and water) are at the highest possible temperature and most efficiently heat downstream components (fuel cell, post-combustor). As pointed out above, the product gas temperature can, if needed and appropriate, be specifically adjusted (lowered) by changing the fuel to air ratio. Furthermore, no detrimental exhaust is produced, and the products do not negatively affect downstream components (no coking). As soon as (or eventually slightly before, taking into account the time it takes for the fuel/air mixture to travel in the fuel cell assembly) the fuel cell reaches light-off temperature, so essentially beginning at the moment when the fuel cell is at a temperature sufficiently high for starting operation, the fuel to air ratio at the inlet of the reformer is changed immediately or smoothly/continuously to or near to the optimum stoichiometric ratio for partial oxidation of the fuel. This change of ratio of fuel to air can be carried out by ramping up smoothly in an S-type curve to the stoichiometric ratio of the partial oxidation of the fuel which then provides carbon monoxide and hydrogen allowing the fuel cell to start operation and generation of electricity.

Typically once the fuel cell has reached light-off temperature, and after having ramped the stoichiometric ratio to the partial oxidation regime, the fuel to air ratio at the inlet of the reformer is kept preferably not more than 20 % off the optimum stoichiometric ratio for partial oxidation of the fuel (stoichiometric factor +/-20%), preferably not more than 10% off the optimum stoichiometric ratio for partial oxidation of the fuel. If butane is used as a fuel, this means that the butane/oxygen ratio is preferably kept within a range of 1:1-1:3, even more preferably in the range of 1:1.5-1:2.5.

According to a further embodiment of the invention, heat produced in the reformer is additionally transported to the other units of the fuel cell assembly by means of conduction and/or radiation.

The fuel cell assembly may, as already pointed out above, additionally comprise at least one post combustor. This post-combustor can also be heated by the heated reaction products of the reformer which have passed the at least one fuel cell.

According to a further embodiment of the invention, the external energy source mentioned above comprises at least one resistive heating unit, preferentially connected to a battery/capacitor charged by the fuel cell under steady state operation. This resistive heating unit e.g. comprises at least one electrically resistive element, e.g. a heating wire or coil, located in the inside of the reformer.

A further embodiment of the invention is characterised in that the reformer comprises at least one catalytically active reaction zone which can be efficiently operated for total oxidation of the fuel as well as for partial oxidation of the fuel. Preferably the reformer comprises channel structures and/or bead type structures comprising ceramic support structures with catalytic coatings, e.g. comprising noble metals. One such catalyst allowing partial as well as a total oxidation conditions with high efficiency controllably depending on the fuel to air ratio is given if the reformer e.g. comprises a rhodium-based catalyst, preferably a $Rh/Al_2O_3$ or a $Rh/Ce_{0.5}Zr_{0.5}O_2$ catalyst. Generally therefore a catalyst suitable for partial oxidation can be used, preferably a noble metal based catalyst (e.g. Rh, Ru). Also possible is a Perovskite type catalyst. Also catalysts based on combinations/mixtures of these are possible.

Preferentially, the fuel cell used in the present context is a solid oxide fuel cell.

Furthermore the present invention relates to the use of essentially only a reformer for starting up a fuel cell assembly. In this specific use only the reformer of the fuel cell assembly is initially heated by means of an external energy source up to reaching at least locally the reaction temperature of the fuel/air mixture in said reformer initiating catalytic conversion of said mixture into heated products in an exothermic reaction, preferably und total oxidation conditions, and directing the heated products through the fuel cell for heating up the fuel cell until said fuel cell reaches light-off temperature.

According to a further preferred embodiment also hybrid operation is possible, i.e. it is possible to start up the fuel cell assembly by first heating up essentially only using the reformer by means of the external energy source up to reaching at least locally the reaction temperature of the fuel/air mixture in said reformer, wherein the input of energy via the external energy source is then essentially continued until also the fuel cell reaches light-off temperature. So it is possible to stop the action of the external energy source as soon as the reformer starts to produce heat, it is however also possible to continue the action of the external energy source in order to furthermore speed up the heating of the fuel cell assembly, e.g. until a temperature is reached when the external energy source is not efficient any more (e.g. above 300°C), or even until the fuel cell reaches light-off temperature (e.g. around 600°C), or even until the whole fuel cell assembly has reached steady-state temperature conditions.

It is also possible to use a reformer which comprises at least two sections and/or chambers and/or channels, arranged in parallel and/or sequentially, wherein at least one first section/chamber/channel is adapted for total oxidation of the fuel and at least one second chamber/section/channel is adapted for partial oxidation. Then, especially if additionally means like directing flaps, valves or the like are provided to control the flow through these sections/chambers/channels depending on the desired oxidation conditions startup can be optimized. It is then for example possible to selectively channel the fuel/air mixture through the first section/chamber/channel adapted for total oxidation as long as TOX conditions are desired for the startup process, and to then immediately or gradually change to the second section/chamber/channel adapted for partial oxidation if the fuel cell is ready for operation. In these cases the section/chamber/channel adapted for total oxidation can be equipped with a catalyst fully optimized for TOX only, and the section/chamber/channel adapted for partial oxidation with a catalyst fully optimized for POX only (e.g. Pt based catalysts). It should be noted that such a reformer may also not be separated into individual first and second sections/chambers/channels, but it may also comprise a mixture of catalyst systems fully optimized for TOX with catalyst systems fully optimized for POX (bead mixture), or in case of coated channel structures may comprise regions with catalyst systems (e.g. coating) fully optimized for TOX and regions with catalyst systems fully optimized for POX (e.g. alternating stripes, rings or the like). It is noted that such a reformer structure as such is an inventive unit not known in the state of the art however fully within the gist of the above method.

In addition to the above, the present invention relates to a fuel cell assembly, for example for carrying out a method as given above. This fuel cell assembly comprises at least one hydrocarbon fuel source, at least one reformer for conversion of a fuel/air mixture into hydrogen at least in steady-state conditions, at least one fuel cell arranged downstream of the reformer for oxidation of hydrogen with concomitant generation of electrical energy, as well as optionally at least one fuel container, at least one post combustor, at least one battery/capacitor and/or additional units wherein at least one of the reformers is provided either centrally surrounded by the further elements of the fuel cell assembly which during steady-state operation are at an elevated temperature, or is provided surrounding the further elements of the fuel cell assembly which during steady-state operation are at an elevated temperature.

Further embodiments of the present invention are outlined in the dependent claims.

SHORT DESCRIPTION OF THE FIGURES

In the accompanying drawings supporting evidence and preferred embodiments of the invention are documented in which:

Fig. 1      shows a schematic of a fuel cell system and its heat (-), mass (--) and electrical current fluxes(-.-);

Fig. 2      shows the hot part of a solid oxide fuel cell (SOFC) system;

Fig. 3      shows schemes of typical reformer designs, wherein in a) a design with beads and in b) a design with channels is shown;

Fig. 4      shows a heating scheme in which a coil (Joule heating) heats the whole hot part of the system;

Fig. 5      shows the operating principle in a start-up method in which the post-combustor provides the thermal energy to heat up the other components;

Fig. 6      shows the operating principle in a start-up method in which the reformer provides the thermal energy to heat up the other components;

Fig. 7      shows a schematic sketch of a reformer in which a heating coil (Joule heating) heats the reaction zone;

Fig. 8      shows the fuel conversion dependent on catalyst temperature and the definition of the reaction temperature $T_R$ in a reformer;

Fig. 9      shows the heat transport mechanisms to distribute the heat produced inside the reformer, wherein filled arrows indicate heat transfer by conduction and radiation and empty arrows indicate convective heat transport;

Fig. 10     schematically shows how the reformer produces heat by partial (POX) and total (TOX) oxidation, the SOFC by electrochemical reaction and the post-combustor by total oxidation of the remaining gases, wherein filled arrows indicate heat transfer by conduction and radiation and empty arrows indicate convective heat transport;

Fig. 11     shows an operation flow chart for the start-up scheme for the fuel cell assembly;

Fig. 12     shows the exergy flow scheme in a start-up method in which the post-combustor provides the thermal energy to heat up the other components, wherein the numbers correspond to an arbitrary exergy unit (ExU);

Fig. 13     shows the exergy flow scheme in a start-up method in which the reformer provides the thermal energy to heat up the other components, wherein the numbers correspond to an arbitrary exergy unit (ExU);

Fig. 14     show the gas flow and temperature in a start-up method in which the reformer provides the thermal energy to heat up the other components (a) and in a start-up method in which the post-combustor provides the thermal energy to heat up the other components (b);

Fig. 15     show the gas composition in a start-up method in which the reformer provides the thermal energy to heat up the other components (a) and in a start-up method in which the post-combustor provides the thermal energy to heat up the other components (b);

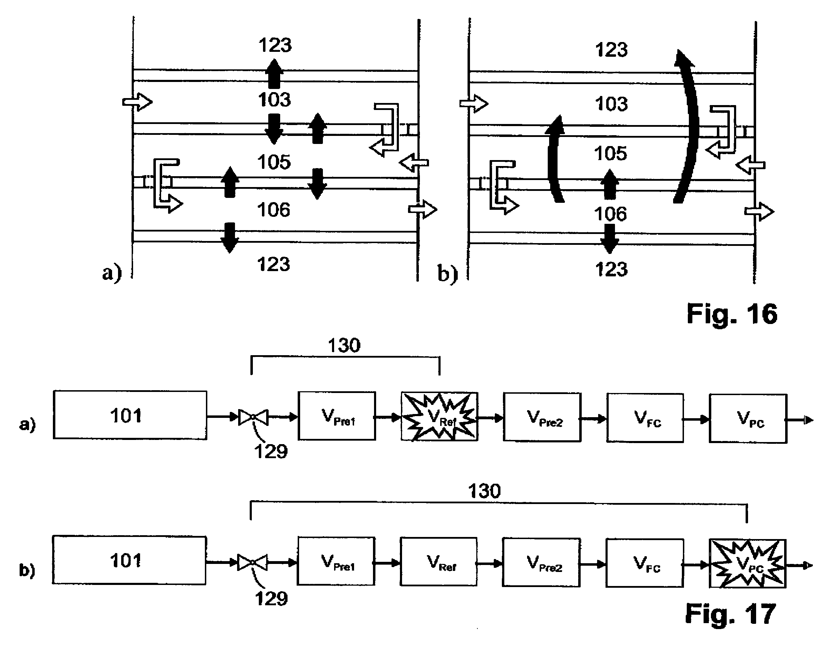

Fig. 16     show how the fuel cell system is heated in a start-up method in which the reformer provides the thermal energy to heat up the other components by three heat sources (a) and in a start-up method in which the post-combustor provides the thermal energy to heat up the other components only by the post-combustor (b);

Fig. 17     show the volume of unreacted gases inside the fuel cell system in a start-up method in which the reformer provides the thermal energy to heat up the other components(a) and the same in a start-up method in which the post-combustor provides the thermal energy to heat up the other components (b);

Fig. 18     shows a reformer structure useful in the present context schematically as well as in microscopic Transmission Electron Microscopy (TEM) views;

Fig. 19     shows a possible fuel cell arrangement in which the reformer with a heat source is arranged centrally; and

Fig. 20     shows a possible fuel cell arrangement in which the reformer with a heat source surrounds the other units of the fuel cell system.

DETAILED DESCRIPTION OF THE PREFERRED EMBODIMENTS

Referring to the drawings and the description hereinbelow, it shall be pointed out that these are for the purpose of illustrating the present preferred embodiments of the invention and not for the purpose of limiting the scope of the invention , as defined in the appended claims.

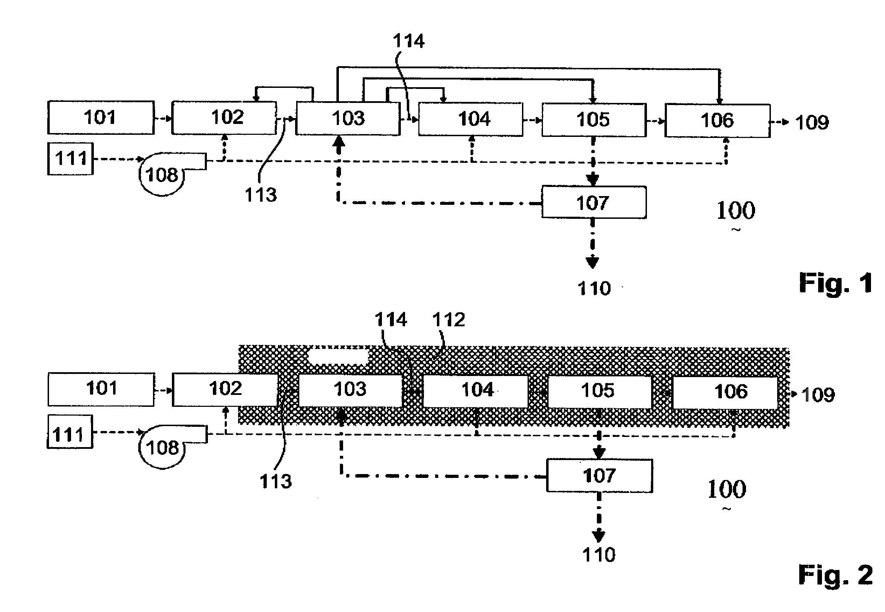

A fuel cell system 100 includes a fuel cell/fuel cell stack 105 for conducting an electrochemical reaction to produce an electrical current, a reformer 103 to catalytically convert a mixture containing fuel and preferably air (an oxygen containing reactant) to produce a hydrogen rich gas that can be used by the fuel cell 105, a battery or a capacitor 107 that is able to store electrical energy, and possibly other components e.g. a post-combustor 106 or several pretreatment units 102,104 (see Figure 1).

The electrical energy stored in the battery/capacitor 107 is used to preheat parts of the reformer 103 until locally a temperature is reached where catalytic total oxidation of the reactant gas starts. The fuel/air mixture is thereby supplied from a fuel container 101 to the reformer 103 where it oxidizes. The heat released by this exothermic reaction is used to heat the reformer 103 and the other components of the fuel cell system 100 leading to a fast and exergetic efficient start-up.

Overview of a solid oxide fuel cell (SOFC) system:

A fuel cell system typically consists of a fuel (e.g. hydrocarbons) container 101, a reformer 103, a fuel cell 105, a post-combustor 106, an electrical energy storage 107 (e.g. battery) and optionally several pretreaters 102,104 (see Fig. 1) or blowers 108.

The main functions of these units are:

Fuel container: The fuel container 101 stores the preferably liquid fuel. It can be either refilled or exchanged in order to guarantee a continuous fuel supply.

Pretreatment 1: The first pretreatment 102 vaporizes the fuel and mixes it with air. Heat can be exchanged with other units.

Reformer: The reformer 103 converts the fuel/air mixture catalytically into a hydrogen rich mixture. In normal steady state operation heat is concomitantly produced. It can be exchanged to the other units. The operation temperature for a butane/air inlet mixture is around 600°C.

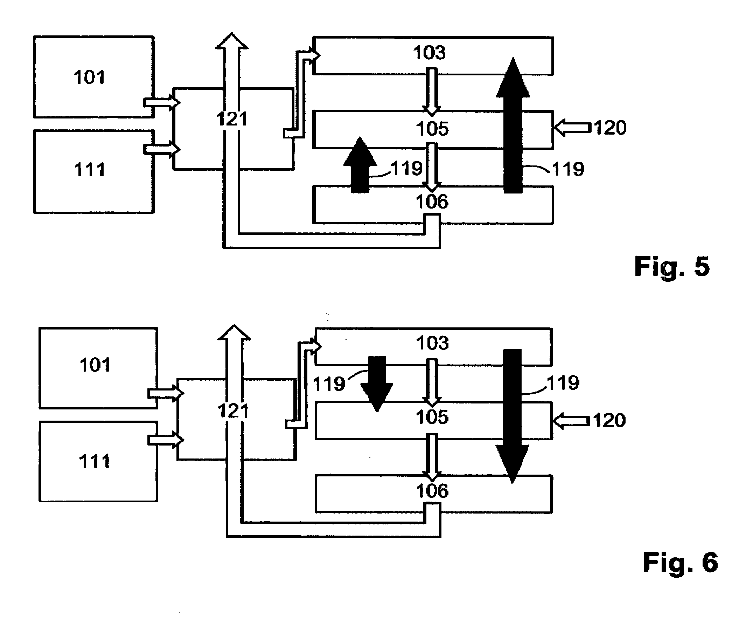

Fuel Cell: The fuel cell 105 electrochemically converts the reformed fuel (reformate) entering on the anode side and air 120 (see Fig. 5 and 6) entering on the cathode side into a product gas and electrical power. In normal steady state operation concomitantly heat is produced. It can be exchanged to the other units. The operation temperature of e.g. a SOFC is around 500-600°C and higher.

Post-Combustor: The post-combustor 106 oxidizes the eventually toxic and/or flammable not fully oxidised exhaust gases exiting the fuel cell into a harmless mixture below a legal threshold. In normal steady state operation heat is produced. It can be exchanged to the other units. The operation temperature is around 600°C.

Battery/Capacitor: The battery/capacitor 107 acts as an electrical energy storage. Its main function is to buffer the energy output. It is also used as energy source for the start-up process. It preferably operates at room temperature.

Applications

The micro fuel cell system is a candidate to replace the conventional battery, due to a potentially higher energy density than a common battery. It can be charged immediately and can also provide geographical independence.

Potential applications of micro fuel cell systems include portable electronic devices, such as industrial scanners, video cameras, laptops, mobile phones, portable data collectors, medical devices or digital assistants, health care devices, PDAs, portable data collectors, industrial scanners etc..

Hot/cold part

A high/medium temperature fuel cell system 100 consists usually of a hot and a cold part. The hot part 112 (see Fig. 2) is thermally insulated and consists typically of the reformer 103, fuel cell 105 and post-combustor unit 106. The pretreaters 102, 104 can be totally or partly included. The cold part is at about room temperature and the hot part is for a SOFC at around 550°C and higher. The battery/capacitor 107, the blower 108, and the fuel container 101 lie in the cold part.

Design of the reformer

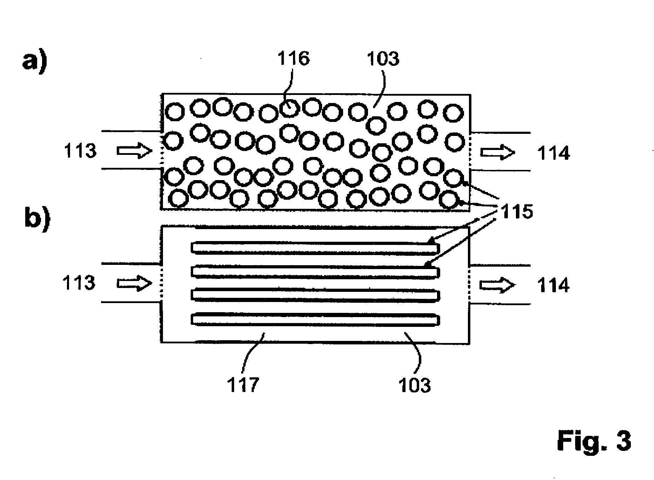

A typical fuel reformer 103 has at least one inlet 113 and one outlet 114. The reactants (fuel and air) enter either premixed or unmixed the reformer 103 at the inlet 113. They are catalytically converted into a product gas that leaves the reformer 103 at the outlet 114. The catalytically active substance is usually a noble metal on a ceramic support. It usually lies on beads 116 (see Fig. 3a) or on the inside of channels 117 or similar structures (see Fig. 3b).

Possible structures for reformers are e.g. disclosed in the following documents, the content of which shall be included in the present specification as concerns the design and constituting elements of a reformer: Jung, H., Yoon, W.L., Lee, H., Park, J.S., Shin, J.S., La, H. and Lee, J.D., 2003. Fast start-up reactor for partial oxidation of methane with electrically-heated metallic monolith catalyst. Journal of Power Sources 124, 76-80; Schmidt, L.D., Klein, E.J., Leclerc, C.A., Krummenacher, J.J. and West, K.N., 2003. Syngas in millisecond reactors: higher alkanes and fast lightoff. Chemical Engineering Science 58, 1037-1041; Ryi, S.K., Park, J.S., Cho, S.H. and Kim, S.H., 2006. Fast start-up of microchannel fuel processor integrated with an igniter for hydrogen combustion. Journal of Power Sources 161,1234-1240; Lee, A.F., Seabourne, C.R. and Wilson, K., 2006. Sulphate-promotion and structure-sensitivity in hydrocarbon combustion over Rh/A1203 catalysts. Catalysis Communications 7, 566-570; US 7160342; US 7131264; US 6887436.

Start-up process

The start-up is a transient process that brings the whole system from an initial condition to the (e.g. steady state or optimum) operation condition. Typically at the initial condition the mass fluxes are zero and the temperature of the hot part is lower than the normal operation temperature. Therefore, the start-up process usually implies an increase of temperature of the hot part of the fuel cell system.

Conventional Start-up Process 1 (CSP1):

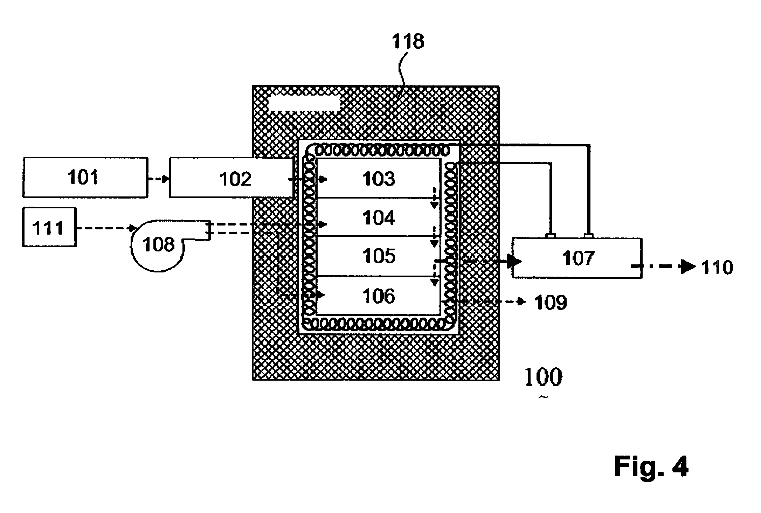

In conventional fuel cell systems the whole hot part is heated by an electrical heater in order to reach the optimum operation temperature (see Fig. 4) by using a heating coil (Joule heating) for the hot part of the system.

Conventional Start-up Process 2 (CSP2):

Above mentioned US 2004/0081871 in the strict context of a fuel cell assembly without any reformer proposes to start up the fuel cell assembly using the following operation steps:

1. Post-combustor is heated electrically to the reaction (light-off) temperature.

2. Reactants (fuel/air) flow to post-combustor and are catalytically oxidized.

3. Heat generated by exothermic reaction in post-combustor is transferred to fuel cell stack (see Fig. 5 for a situation going beyond the disclosure of US 200410081871 as it also includes a reformer).

4. Hot exhaust gases heat the inlet gases of fuel cell in a heat exchange element 121 which is specifically provided for that purpose. Hot gases heat intake of fuel cell stack.

Main advantage: only post-combustor 106 is heated electrically. The rest is heated by chemical reactions.

Main disadvantage: the heating scheme goes against the product flow in the fuel cell assembly under steady state operating conditions, so specific separate heat transfer pathways have to be provided leading to additional unnecessary losses.

Improved start-up (ISP):

The operation scheme during start-up of ISP is schematically shown in Fig. 6, here the reformer 103 provides the thermal energy to heat up the other components.

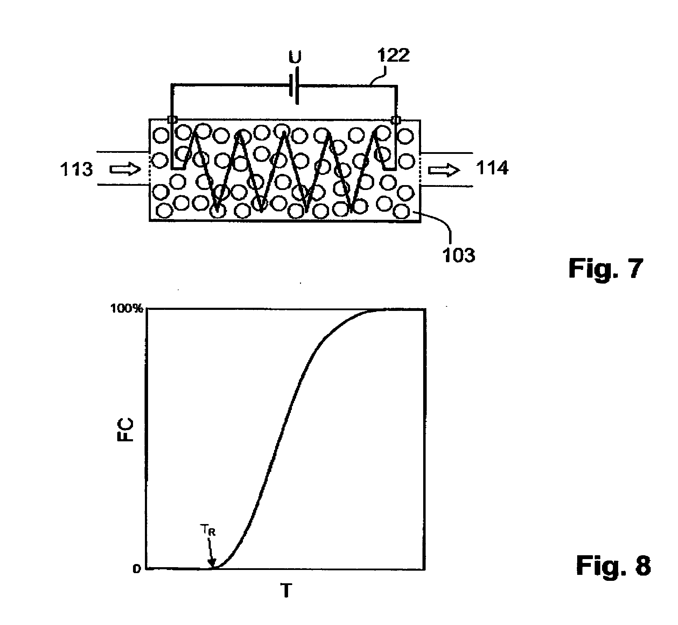

In the ISP the reformer 103 consists of a catalytically active reaction zone made out of a structure that is itself reactive or that is coated with an active material and an electrically resistive element 122 that can be heated by Joule heating (see Fig. 7).

Operation steps for ISP

1. The resistive element 122, e.g. a heating coil/wire, inside the reformer is electrically heated.

2. At least locally the reaction temperature $T_R$ of the fuel/air mixture is reached. The reaction temperature (sometimes also defined as light-off temperature) is defined in this case as the temperature, where the fuel starts to be converted in the reformer (see Fig. 8).

3. An unreacted fuel/air mixture is fed into the reformer 103. It is near or at the stoichiometric ratio of the total oxidation of the fuel.

4. The reformer 103 catalytically converts the reactants into products and heat in an exothermic reaction

$$Fuel + Air \rightarrow Products + Heat$$

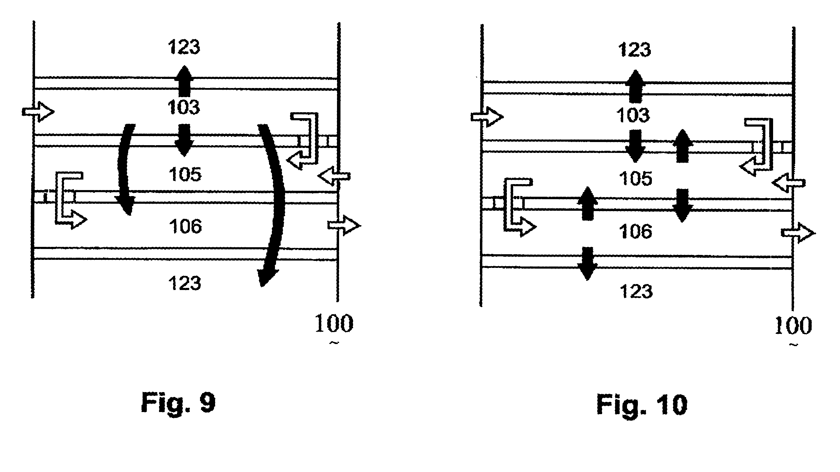

This thermal energy is used to heat the other units by conduction and radiation and/or by convective transport of the heated product gases that heat the other components from the inside (see Fig. 9, showing the heat transport mechanisms to distribute the heat produced inside the reformer. The filled arrows indicate heat transfer by conduction and radiation; the empty arrows indicate convective heat transport).

5. The fuel cell 105 reaches light off temperature, which is defined in this case as the temperature where it starts to produce electrical energy.

6. The fuel to air ratio at the reformer inlet 113 is changed continuously to the optimum stoichiometric ratio for partial oxidation of the fuel.
There are two different reactions working inside the reformer simultaneously; partial oxidation (POX) and total oxidation (TOX).
TOX: e.g.: $C_4H_{10} + 6.5 \, O_2 \rightarrow 4 \, CO_2 + 5 \, H_2O$, highly exothermic
POX: e.g.: $C_4H_{10} + 2 \, O_2 \rightarrow 4 \, CO + 5 \, H_2$, slightly exothermic
Thus, while the reformer produces a hydrogen containing gas it is still producing heat. The amount of produced heat can be controlled by adjusting the TOX to POX ratio. Part of the $H_2$ containing gas is converted by the fuel cell that produces heat and electrical energy. Part of the rest is burned (TOX) inside the post-combustor unit that also releases heat.
The whole system is now heated up by three different components (see Fig. 10 showing how the reformer produces heat by partial and total oxidation, the SOFC by electrochemical reaction and the post-combustor by total oxidation of the remaining gases).

7. The whole system reaches the normal (steady state) operation temperature.

8. The fuel to air ratio at the reformer inlet and all other mass fluxes are changed to the optimum for steady operation.

9. The battery/capacitor 107 recharges as soon as the system produces energy.

This scheme is summarized in the operation flow chart as shown in Fig. 9.
Some more theoretical background of the concepts
The catalyst used for the post-combustor is usually: Pt (+ Support) or Pd (+ Support)
$\rightarrow$ Pt/Pd is known for high total oxidation capability
e.g.: $C_4H_{10} + 6.5 \, O_2 \rightarrow 4 \, CO_2 + 5 \, H_2O$
The catalyst used for the reformer is usually: Rh (+ Support), seldom Ru/Pt
$\rightarrow$ Rh is known for high partial oxidation capability
e.g.: $C_4H_{10} + 2 \, O_2 \rightarrow 4 \, CO + 5 \, H_2$
Recent publications show the potential of high total oxidation capability of e.g. $Rh/Al_2O_3$ catalyst (Lee et al., 2006, see above).
So the gist off the idea is the following: In a reformer with e.g. a Rh catalyst, both total and partial oxidation can occur. The ratio POX to TOX can furthermore unexpectedly efficiently be controlled by the temperature and especially the inlet fuel to air ratio.

Fuel to air ratio (e.g. for butane):

$$\text{if } \frac{\dot{n}_{C_4H_{10}}}{\dot{n}_{O_2}} \approx \frac{1}{6.5} \rightarrow \text{tendency towards total oxidation.}$$

$$\text{if } \frac{\dot{n}_{C_4H_{10}}}{\dot{n}_{O_2}} \approx \frac{1}{2} \rightarrow \text{tendency towards partial oxidation.}$$

For CSP2:

The existing idea as given above and in accordance with the state-of the-art is to heat the fuel cell system 100 by the post-combustor 106, due to its ability to totally oxidize fuel und thus thermal energy generation.

For ISP:

Because the reformer 103 is also able to totally oxidize the fuel, it can also be used as a heat generating source at the start-up process.

Advantages of the ISP compared to CSP1:

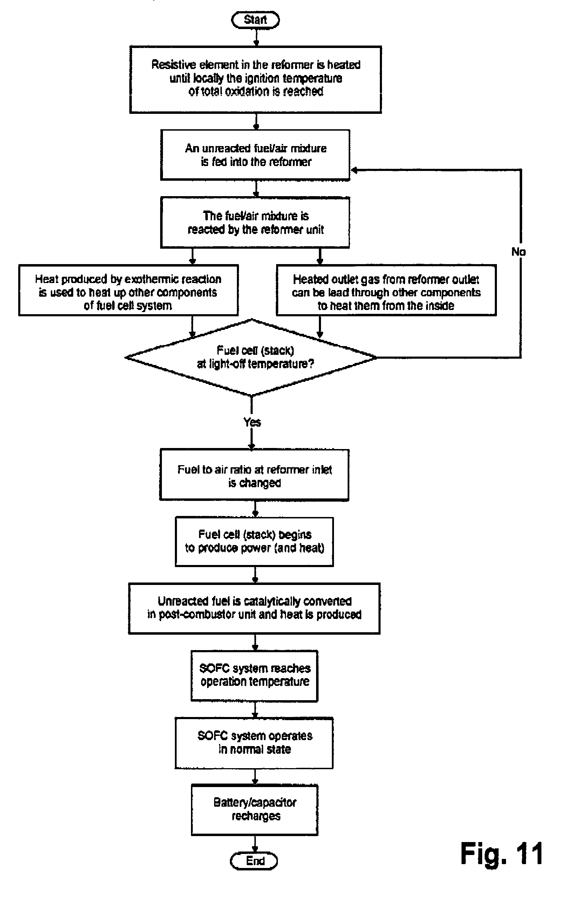

The exergetic efficiency is significantly higher: Given the fuel cell system 100 needs 1 exergy unit (ExU) to be heated up from initial temperature to the normal operation temperature. In CSP1, the whole exergy amount is provided by the battery/capacitor with an assumed efficiency of 1. The battery/capacitor must be charged by the fuel cell system under normal operation. An exergetic efficiency of 0.19 is realistic leading to a chemical exergy input by the fuel of 5.3 ExU (see Fig. 11 showing the exergy flow scheme of CSP1. The numbers correspond to an arbitrary exergy unit, ExU).
The same exergy flow considerations are made for the ISP. Again the fuel cell system needs 1 ExU to be heated up from initial temperature to the normal operation temperature. It is assumed that 40% of the exergy is provided by the battery/capacitor (with an assumed efficiency of 1). Thus the chemical exergy provided by the fuel needs to be 2.1. 60% of the exergy is provided by the exothermic reaction inside the reformer. Given that the heat-up efficiency of the reformer is 60% (rather conservative) then 1 ExU of the fuel needs to be provided additionally. This leads to a total chemical exergy input of 3.1 (see Fig. 10, showing the exergy flow scheme of the ISP. The numbers correspond to an arbitrary exergy unit ExU).
This estimation leads to a ExU reduction for the ISP is 2.2 out of 5.3, or a saving of 42% of exergy input.

Advantages of the ISP to the CSP2:

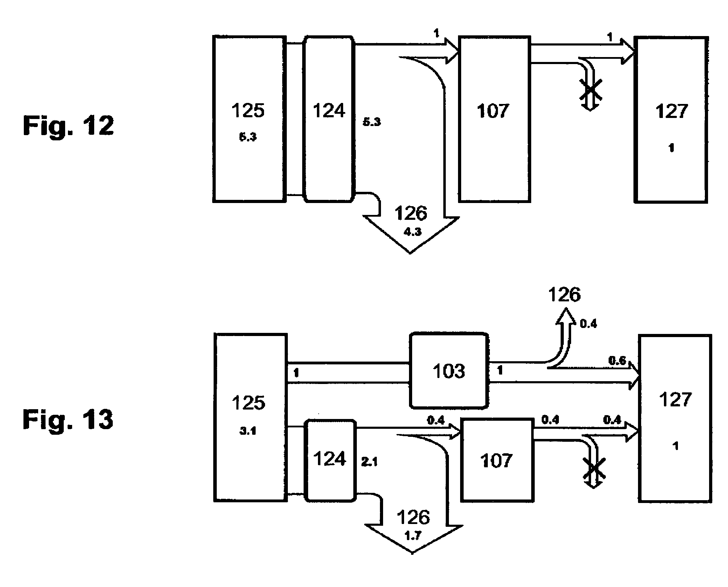

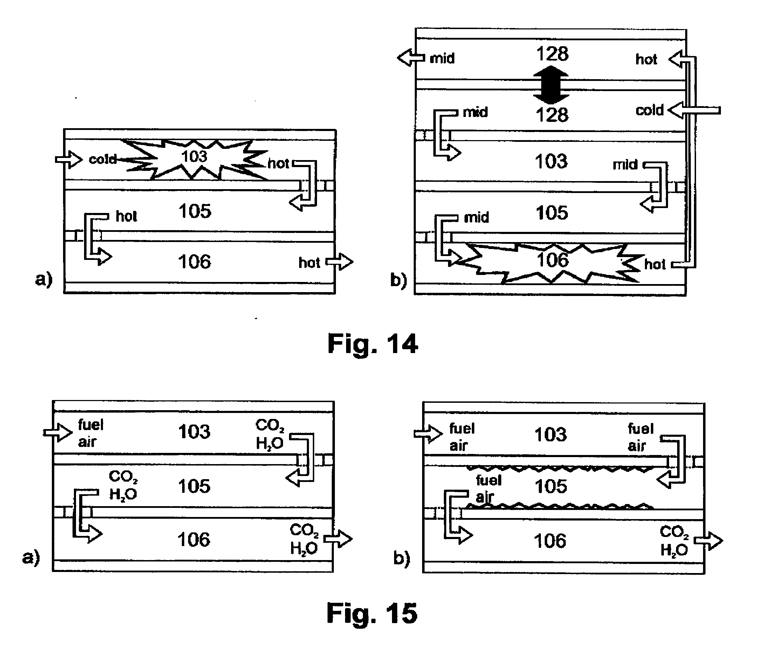

Hot combustion gases: In the ISP hot combustion gases directly heat the other units from the inside. Thus, totally oxidized, hot gases leaving the reformer directly enter the other units. In CSP2 the other components are only heated indirectly via a heat exchanger that heats the inflow gases leading to a lower efficiency (see Fig. 12, showing the gas flow and temperature of (a) ISP and (b) CSP2).
Coking and deactivation of the fuel cell: Coking and other deactivation mechanisms are a serious problem in fuel cell research, because they lower the performance of the fuel cell. In the ISP, the fuel/air mixture is completely burnt before the inlet of the fuel cell. Thus, a mixture of $CO_2$ and $H_2O$ and air is very unlikely to deactivate the fuel cell. In the CSP2, unburned or partially burned fuel flows through the fuel cell. The fuel cell temperature rises constantly during the start-up process. It is known that for certain mixtures with carbon contents (other than $CO_2$) and certain temperatures, deactivation of the fuel cell occurs. During start-up, it is likely that at least at one moment the condition inside the fuel cell is in the deactivation regime (see Fig. 13, showing the gas composition of (a) ISP and (b) CSP2).
This problem of CSP2 could eventually be avoided by bypassing the fuel leading to other disadvantages (e.g. simplicity of system).
Change of fuel to air ratio: During the time before the normal operation temperature of the fuel cell system is reached, the fuel to air ratio can be changed continuously in the ISP. Thus, the whole fuel cell system is heated by three heat sources: the reformer (partial/total oxidation), the fuel cell (electrochemical reaction) and the post-combustor (total oxidation). In CSP2 the heat is only provided by the post-combustor (see Fig. 14, showing how the fuel cell system is heated (a) in the ISP by three heat sources and (b) in CSP2 only by the post-combustor).
Therefore, the heat distribution is better in ISP than in CSP2.

Controlling the system

The volume flow of the fuel through the fuel cell system is usually controlled by a valve 129 behind the fuel container 101. Thus, to change the volume flow the valve needs to be adjusted. Since the hottest part of the fuel cell system during start-up is the heat source, the temperature measurement is preferably taken in the reformer for the ISP and in the post-combustor for CSP2. Thus, the volume of the unreacted gases forms a buffer volume (see Fig. 15, showing the volume of unreacted gases inside the fuel cell system (a) in the ISP and (b) in CSP2).

The buffer volume is approximated as:

$$\text{ISP:} \qquad V_{\text{buffer, ISP}} = V_{\text{Pre1}} + 0.5\, V_{\text{Ref}} + V_{\text{pipes,short}}$$

$$\text{CSP2:} \qquad V_{\text{buffer, CSP2}} = V_{\text{Pre1}} + V_{\text{Ref}} + V_{\text{Pre2}} + V_{\text{FC}} + 0.5\, V_{\text{PC}} + V_{\text{pipes,long}}$$

$$\rightarrow V_{\text{buffer, ISP}} \ll V_{\text{buffer, CSP2}}$$

Therefore, the ISP is easier and faster to control than the CSP2 because its buffer volume is much smaller. Furthermore, small buffer volumes usually lead to higher efficiencies.

Post-combustor/reformer volume

The reactor volume of the post-combustor is estimated as follows:

It is assumed that the stoichiometric fuel to air ratio inside the fuel cell is high. Thus, there is no need for a separate air inlet in the post-combustor. Furthermore, the reformer equivalence ratio, based on partial oxidation is 0.8, the fuel is butane and that the space time inside the reformer is similar to that of the post-combustor. This leads to a post-combustor volume, which is around 3 to 6 times larger than that of the reformer, dependent on the fuel to air stoichiometry inside the fuel cell that is typically between 2 and 4.

Thus, the advantage of the ISP is the smaller volume that needs to be heated up electrically.

**Experimental**

A possible set up for the fuel cell assembly as proposed herein can be built by using concentric quartz tubes in which in a certain section catalyst material is provided and the catalyst section is closed on both ends by a plug material. Like this for example in the innermost tube the catalyst material for the re-former can be provided, between the innermost tube and the second tube the catalyst/structure for the fuel cell and/or post-combustor or vice versa. Possible dimensions for a micro fuel cell are for example two concentric tubes with wall thickness of about 1 mm and an inner diameter of the inner tube of 1.5 mm and an inner diameter of the outer tube of 5 mm. In such a setup, the catalyst section of the reformer can for example have a length of around 10mm for a sufficient reaction area.

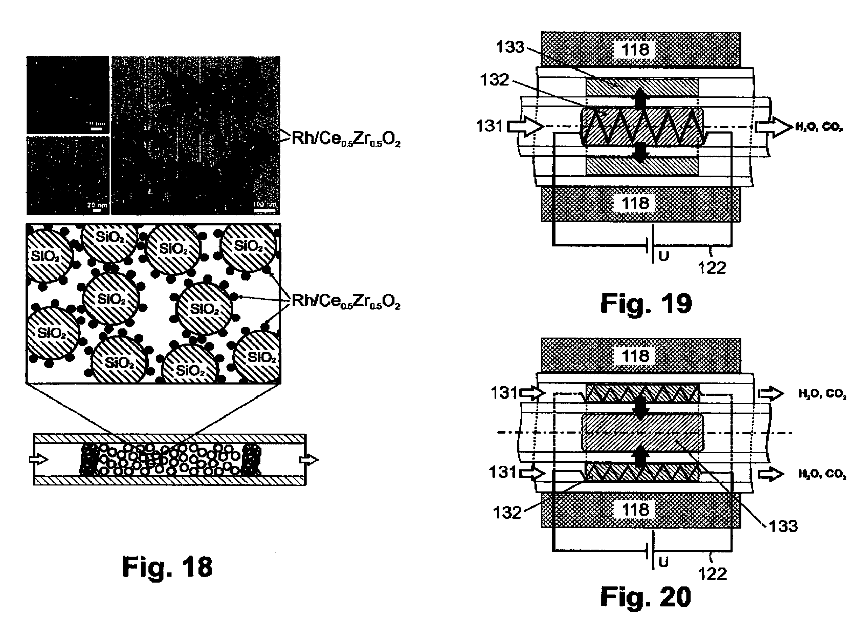

The catalyst used for the experiments was a packed bed (PB) with catalytic nanoparticles. For the reformer a catalyst consisting of $Rh/Ce_{0.5}Zr_{0.5}O_2$ nano particles was used and $SiO_2$ was used as supporting material to reduce the pressure drop (weight ratio of 1:3 of these two components within the packed bed). Figure 18 shows a schematic view of the $SiO_2$ sand surrounded by the catalyst nano particles (centre picture) as well as SEM pictures (top pictures) of the particles.

For the post-combustor catalyst an analogous packed bed was used however the nano particles were replaced by $Pt/Ce_{0.5}Zr_{0.5}O_2$ nano particles.

The catalyst section was closed in both cases by using $Al_2O_3/SiO_2$ fibre plugs as indicated in figure 18 (bottom picture).

As test rigs two different reactors were set up, one first of the general layout as given in figure 19, wherein the heat source 132 for the start-up process (reformer, and for comparison post-combustor) is located centrally in the innermost tube and is provided with a resistive heating unit 122 (e.g. Kanthal D wire). The fuel/air mixture 131 (e.g. butane/air) enters this setup in the central tube from the left side and during the start-up phase, when total oxidation (TOX) conditions are maintained, exits the central tube as water and carbon dioxide on the right side.

In this setup, the further components 133 of the fuel cell are surrounding this heat source element 132 leading to the heat transfer as indicated by the solid arrows during start up. This whole hot area of the fuel cell assembly is surrounded by an insulation 118.

The advantage of this first setup is the optimum heat transfer from the inside to the outside at least during start up. However care has to be taken that still sufficient flow is possible through the central reactor as the pressure drop across the heat source 132 can be considerable.

So in this first general setup, in one example it was tested to have the reformer as the central heat source 132 and for comparison also to have the post-combustor as the central heat source 132.

A second general layout was tested as given in figure 20, in this case the further components 133 of the fuel cell are located centrally in the innermost tube and the heat source 132 for the start-up process (reformer, and for comparison post-combustor) is surrounding these central elements, so is located in the interspace between the innermost tube and the outer tube. Again this hot section of the fuel cell assembly is surrounded by a layer of insulation material 118.

In this case the fuel/air mixture 131 enters from the left side in the interspace between the innermost tube and the outer tube and the fully oxidated reaction products exit towards the right side. In this case the resistive heating unit 122 is provided in the interspace where the heat source 132 is located. The advantage of this second set up is the larger volume available on the outside and the higher possible mass flow.

So in this second general setup, in one example it was tested to have the reformer as the heat source 132 and for comparison also to have the post-combustor as the heat source 132.

Using these experimental set-ups it was verified that indeed the reformer, so a catalyst structure which in any case can be operated under partial oxidation (POX) conditions for actual fuel cell operation, can be used and operated under a total oxidation (TOX) conditions efficiently for the starting process, i.e. for heating of the fuel cell assembly until the fuel cell starts to become active. It was found that for the above catalyst the light off temperature of the reformer is in the range of 220°C indicating that the action of the external resistive heating can be stopped after having reached that temperature, it is however preferably continued up to having reached a temperature of e.g. above 300°C or even above that.

LIST OF REFERENCE NUMERALS

| | |
|---|---|
| 100 | fuel cell assembly |
| 101 | fuel container (e.g. liquid butane) |
| 102 | pre-treatment 1 |
| 103 | reformer |
| 104 | pre-treatment 2 |
| 105 | fuel cell |
| 106 | post-combustor |
| 107 | battery/capacitor |
| 108 | blower |
| 109 | exhaust |
| 110 | power output |
| 111 | air |
| 112 | hot part of fuel cell assembly |
| 113 | inlet of reformer |
| 114 | outlet of reformer |
| 115 | catalyst |
| 116 | beads |
| 117 | channel structures |
| 118 | insulation |
| 119 | heat flow |
| 120 | air for 105 |
| 121 | heat exchanger |
| 122 | resistive heating unit |
| 123 | further units of the fuel cell assembly |
| 124 | fuel cell system |
| 125 | fuel |
| 126 | loss |
| 127 | hot fuel cell system |
| 128 | heat exchange unit, HEX channel |
| 129 | valve |
| 130 | unreacted gases |
| 131 | fuel/air mixture |
| 132 | heat sources of fuel cell assembly (reformer, post-combustor) |

| 133 | components of the fuel cell assembly different from 132 |
|---|---|
| T | temperature |
| $T_R$ | reaction temperature in reformer |
| FC | fuel conversion |
| U | voltage for 122 |
| SOFC | solid oxide fuel cell |
| PC | post combustor (106) |
| $V_{Pre1}$ | volume of 102 |
| $V_{Ref}$ | volume of 103 |
| $V_{Pre2}$ | volume of 104 |
| $V_{FC}$ | volume of 105 |
| $V_{PC}$ | volume of 106 |

**Claims**

1. A method for starting up a fuel cell assembly (100) comprising at least one hydrocarbon fuel source (101), at least one reformer (103) for conversion of a fuel/air mixture into hydrogen at least in steady-state conditions, at least one fuel cell (105) arranged downstream of the reformer (103) for oxidation of hydrogen with concomitant generation of electrical energy, wherein
the fuel cell assembly is started up by first heating up essentially only the reformer (103) by means of an external energy source (107,122) up to reaching at least locally the reaction temperature (TR) of the fuel/air mixture in said reformer (103) initiating catalytic conversion of said mixture into heated products in an exothermic reaction, and directing the heated products through the fuel cell (105) for heating up the fuel cell (105) from the inside until said fuel cell (105) reaches light-off temperature, and switching the mode of operation to steady state operation as soon as the fuel cell assembly (100) has reached normal operation temperature.

2. Method according to claim 1, wherein until the fuel cell (105) reaches light-off temperature the fuel to air ratio at the inlet (113) of the reformer (103) is kept near to or at optimum stoichiometric ratio for total oxidation of the fuel.

3. Method according to claim 2, wherein at and subsequent to the fuel cell (105) reaching light-off temperature the fuel to air ratio at the inlet (113) of the reformer (103) is changed continuously or immediately to the optimum stoichiometric ratio for partial oxidation of the fuel.

4. Method according to any of the preceding claims 2 or 3, wherein until the fuel cell (105) reaches light-off temperature the fuel to air ratio at the inlet (113) of the reformer (103) is kept such that excess air and/or oxygen is present favouring the total oxidation of the fuel, and/or wherein at and subsequent to the fuel cell (105) reaching light-off temperature the fuel to air ratio at the inlet (113) of the reformer (103) is increased continuously or immediately by reduction of air/oxygen supply to favour partial oxidation of the fuel.

5. Method according to any of the preceding claims 2, 3 or 4, wherein until the fuel cell (105) reaches light-off temperature the fuel to air ratio at the inlet (113) of the reformer (103) is kept in the range of the optimum stoichiometric ratio for total oxidation of the fuel or below, preferably not more than 20 % off the optimum stoichiometric ratio for total oxidation of the fuel, preferably not more than 10% off the optimum stoichiometric ratio for total oxidation of the fuel, and/or wherein at and subsequent to the fuel cell (105) reaching light-off temperature the fuel to air ratio at the inlet (113) of the reformer (103) is changed continuously or immediately to a ratio for partial oxidation of the fuel not more than 20 % off the optimum stoichiometric ratio for partial oxidation of the fuel, preferably not more than 10% off the optimum stoichiometric ratio for partial oxidation of the fuel.

6. Method according to any of the preceding claims, wherein heat produced in the reformer (103) is additionally transported to the other units of the fuel cell assembly (100) by means of conduction and/or radiation.

7. Method according to any of the preceding claims, wherein the fuel cell assembly (100) additionally comprises at least one post combustor (106) which is heated by the heated products which have passed the at least one fuel cell (105).

8. Method according to any of the preceding claims, wherein the external energy source (107, 122) comprises at least one resistive heating unit (122), preferentially connected to a battery/capacitor (107) charged by the fuel cell (105) under steady state operation.

9. Method according to claim 8, wherein the resistive heating unit (122) comprises at least one electrically resistive element located in the inside of the reformer (103).

10. Method according to any of the preceding claim, wherein the reformer (103) comprises at least one catalytically active reaction zone which can be efficiently operated for total oxidation of the fuel as well as partial oxidation of the fuel, wherein preferably the reformer (103) comprises channel structures (117) and/or bead type structures (116) comprising ceramic support structures with catalytic coatings.

11. Method according to any of the preceding claims, wherein the reformer (103) comprises a catalyst suitable for partial oxidation, preferably a noble metal based catalyst and/or a Perovskite type catalyst, even more preferably a ruthenium and/or rhodium and/or nickel based catalyst such as a $Rh/Al_2O_3$ or a $Rh/Ce_{0.5}Zr_{0.5}O_2$ catalyst.

12. Method according to any of the preceding claims, wherein the fuel cell (105) is a solid oxide fuel cell.

13. Method according to any of the preceding claims, wherein the fuel cell assembly is started up by first heating up essentially only the reformer (103) by means of an external energy source (107, 122) up to reaching at least locally the reaction temperature (TR) of the fuel/air mixture in said reformer (103) and wherein the input of energy via the external energy source (107, 122) is then continued preferably until reaching a maximum temperature above 300°C, or even continued until the fuel cell reaches light-off temperature.

14. Method according to any of the preceding claims, wherein the reformer (103) comprises at least two sections and/or chambers and/or channels, arranged in parallel and/or sequentially, wherein at least one first section/chamber/ channel is adapted for total oxidation of the fuel and at least one second chamber/section/channel is adapted for partial oxidation, and wherein preferably means are provided to control the flow through these sections/chambers/ channels depending on the desired oxidation conditions.

15. Reformer (103), in particular for use in a method as claimed in any of the preceding claims, comprising at least two distinct sections and/or chambers and/or channels, arranged in parallel and/or sequentially, wherein at least one first section/chamber/channel is adapted for total oxidation of the fuel and at least one second chamber/section/ channel is adapted for partial oxidation, wherein preferably means are provided to control the flow through these sections/chambers/channels depending on the desired oxidation conditions.

16. Reformer (103), in particular for use in a method as claimed in any of the preceding claims 1-14, comprising a mixture of catalyst systems essentially fully optimized for total oxidation with catalyst systems fully optimized for partial oxidation, preferably as a bead mixture, and/or in case of preferably coated channel structures comprising regions with catalyst coating fully optimized for total oxidation and regions with catalyst coating fully optimized for partial oxidation.

17. Use of a reformer (103) for starting up a fuel cell assembly (100) wherein only the reformer (103) of the fuel cell assembly (100) is initially heated by means of an external energy source (107, 122) up to reaching at least locally the reaction temperature (TR) of the fuel/air mixture in said reformer (103) initiating catalytic conversion of said mixture into heated products in an exothermic reaction, and directing the heated products through the fuel cell (105) for heating up the fuel cell (105) until said fuel cell (105) reaches light-off temperature.

18. Fuel cell assembly (100) for carrying out a method according to any of the claims 1-14, comprising at least one hydrocarbon fuel source (101), at least one reformer (103) for conversion of a fuel/air mixture into hydrogen at least in steady-state conditions, at least one fuel cell (105) arranged downstream of the reformer (103) for oxidation of hydrogen with concomitant generation of electrical energy, as well as optionally at least one fuel container (101), at least one post combustor (106), at least one battery/capacitor (107) and/or additional units (102,104,121,123,128) wherein at least one of the reformers (103) is provided either centrally surrounded by the further elements (104, 105, 106) of the fuel cell assembly (100) which during steady-state operation are at an elevated temperature, or is provided surrounding the further elements (104, 105, 106) of the fuel cell assembly (100) which during steady-state operation are at an elevated temperature.

Fig. 1

Fig. 2

a)

b)

103

116

115

113    114

113    114

117

103

**Fig. 3**

Fig. 4

EP 2 006 945 A1

**Fig. 5**

**Fig. 6**

EP 2 006 945 A1

Fig. 7

Fig. 8

**Fig. 9**

**Fig. 10**

EP 2 006 945 A1

Start

Resistive element in the reformer is heated
until locally the ignition temperature
of total oxidation is reached

An unreacted fuel/air mixture
is fed into the reformer

The fuel/air mixture is
reacted by the reformer unit

Heat produced by exothermic reaction
is used to heat up other components
of fuel cell system

Heated outlet gas from reformer outlet
can be lead through other components
to heat them from the inside

Fuel cell (stack)
at light-off temperature?

No

Yes

Fuel to air ratio at reformer inlet
is changed

Fuel cell (stack) begins
to produce power (and heat)

Unreacted fuel is catalytically converted
in post-combustor unit and heat is produced

SOFC system reaches
operation temperature

SOFC system operates
in normal state

Battery/capacitor
recharges

End

Fig. 11

EP 2 006 945 A1

Fig. 12

Fig. 13

Fig. 14

Fig. 15

Fig. 16

Fig. 17

**Fig. 19**

**Fig. 20**

**Fig. 18**

European Patent Office

**EUROPEAN SEARCH REPORT**

Application Number

EP 07 01 2131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 739 777 A (EBERSPAECHER J GMBH & CO [DE]) 3 January 2007 (2007-01-03) <br><br> * paragraph [0021] - paragraph [0023] * <br> * paragraph [0036] - paragraph [0038] * | 1-5,7, 10,12, 13,17 | INV. <br> H01M8/04 <br> H01M8/06 <br> H01M8/24 |
| A | * paragraph [0041] - paragraph [0051] * <br> * figures 1,3 * <br> ----- | 1,8,9 | ADD. <br> H01M8/12 |
| D,X | US 2004/081871 A1 (KEARL DANIEL A [US] ET AL) 29 April 2004 (2004-04-29) <br> * paragraph [0027] - paragraph [0028] * <br> * paragraph [0036] - paragraph [0043] * <br> * paragraph [0054] - paragraph [0056] * <br> * paragraph [0073] - paragraph [0077] * <br> ----- | 1,6,8,9, 12,13,17 | |
| X | EP 1 408 003 A (MATSUSHITA ELECTRIC IND CO LTD [JP]) 14 April 2004 (2004-04-14) <br> * paragraph [0009] * <br> * paragraph [0042] - paragraph [0051] * | 1,10,11, 13-17 | |
| A | * paragraph [0060] - paragraph [0069]; figures 1,7 * <br> ----- | 18 | |
| | | | TECHNICAL FIELDS SEARCHED (IPC) |
| X | DE 101 42 578 A1 (WEBASTO THERMOSYSTEME GMBH [DE]) 10 April 2003 (2003-04-10) <br> * paragraph [0017] - paragraph [0026] * <br> * paragraph [0067] - paragraph [0078] * <br> * figure 1 * <br> ----- | 1-7,12, 17 | H01M |
| X | US 2005/112452 A1 (CRUMM AARON T [US] ET AL) 26 May 2005 (2005-05-26) <br> * paragraph [0014] - paragraph [0022] * <br> * figures 1,2,4,5 * <br> ----- | 15,16,18 | |
| | -/-- | | |

The present search report has been drawn up for all claims

| Place of search | Date of completion of the search | Examiner |
|---|---|---|
| The Hague | 25 October 2007 | Schwake, Andree |

EPO FORM 1503 03.82 (P04C01)

European Patent
Office

**EUROPEAN SEARCH REPORT**

Application Number

EP 07 01 2131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NICO HOTZ, MICHAEL J. STUTZ, STEFAN LOHER, WENDELIN J. STARK, DIMOS POULIKAKOS: "Syngas production from butane using a flame-made Rh/Ce0.5Zr0.5O2 catalyst" APPLIED CATALYSIS B: ENVIRONMENTAL, vol. 73, 12 January 2007 (2007-01-12), pages 336-344, XP002454987 * page 342 - page 343 * ----- | 1,11 | |
| D,A | ADAM F. LEE, CHÉ R. SEABOURNE, KAREN WILSON: "Sulphate-promotion and structure-sensitivity in hydrocarbon combustion over Rh/Al2O3 catalysts" CATALYSIS COMMUNICATIONS, vol. 7, no. 8, 9 March 2006 (2006-03-09), pages 566-570, XP002454988 * the whole document * ----- | 1,11 | |
| | | | TECHNICAL FIELDS SEARCHED (IPC) |

The present search report has been drawn up for all claims

| Place of search | Date of completion of the search | Examiner |
|---|---|---|
| The Hague | 25 October 2007 | Schwake, Andree |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 01 2131

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2007

| Patent document cited in search report | | Publication date | Patent family member(s) | | Publication date |
|---|---|---|---|---|---|
| EP 1739777 | A | 03-01-2007 | NONE | | |
| US 2004081871 | A1 | 29-04-2004 | CA | 2446360 A1 | 28-04-2004 |
| | | | EP | 1439594 A2 | 21-07-2004 |
| | | | JP | 2004152757 A | 27-05-2004 |
| | | | KR | 20040038739 A | 08-05-2004 |
| | | | TW | 229959 B | 21-03-2005 |
| EP 1408003 | A | 14-04-2004 | KR | 20040032784 A | 17-04-2004 |
| | | | US | 2004105794 A1 | 03-06-2004 |
| DE 10142578 | A1 | 10-04-2003 | AU | 2002336893 A1 | 18-03-2003 |
| | | | WO | 03021696 A2 | 13-03-2003 |
| US 2005112452 | A1 | 26-05-2005 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040081871 A
- US 7160342 B
- US 7131264 B
- US 6887436 B
- US 200410081871 A

### Non-patent literature cited in the description

- **JUNG, H. ; YOON, W.L. ; LEE, H. ; PARK, J.S. ; SHIN, J.S. ; LA, H. ; LEE, J.D.** Fast start-up reactor for partial oxidation of methane with electrically-heated metallic monolith catalyst. *Journal of Power Sources,* 2003, vol. 124, 76-80
- **SCHMIDT, L.D. ; KLEIN, E.J. ; LECLERC, C.A. ; KRUMMENACHER, J.J. ; WEST, K.N.** Syngas in millisecond reactors: higher alkanes and fast lightoff. *Chemical Engineering Science,* 2003, vol. 58, 1037-1041
- **RYI, S.K. ; PARK, J.S. ; CHO, S.H. ; KIM, S.H.** Fast start-up of microchannel fuel processor integrated with an igniter for hydrogen combustion. *Journal of Power Sources,* 2006, vol. 161, 1234-1240
- **LEE, A.F. ; SEABOURNE, C.R. ; WILSON, K.** Sulphate-promotion and structure-sensitivity in hydrocarbon combustion over Rh/A1203 catalysts. *Catalysis Communications,* 2006, vol. 7, 566-570